# EUROPÄISCHE PATENTSCHRIFT

(11) **EP 0 834 620 B1**
(45) Veröffentlichungstag und Bekanntmachung des Hinweises auf die Patenterteilung: **17.04.2002**
(21) Anmeldenummer: 97112776.6
(22) Anmeldetag: 24.07.1997
(51) Int. Cl.: E01C 19/48, E01C 19/00

(54) **Einbauzug**
Paving train
Train de finisseuses

(30) Priorität: 01.10.1996 DE 29617116 U
(43) Veröffentlichungstag der Anmeldung: 08.04.1998
(73) Patentinhaber: Joseph Vögele AG, D-68146 Mannheim (DE)
(72) Erfinder: Grundl, Roland, Dipl.-Ing., 69253 Heiligkreuzsteinach (DE)
(74) Vertreter: Grünecker, Kinkeldey, Stockmair & Schwanhäusser Anwaltssozietät

(56) Entgegenhaltungen:
- EP-A- 0 667 415
- DE-U- 9 204 559
- FR-A- 2 697 547
- US-A- 5 100 277

## Beschreibung

Die Erfindung betrifft einen Einbauzug gemäß dem Oberbegriff des Anspruchs 1.

Beim Einbauen von Belagschichten aus bituminösem oder Beton-Einbaugut, z.B. beim zweilagigen Einbau von Belagschichten, werden zwei oder mehrere Einheiten zu einem Einbauzug zusammengefasst. Der kleinste Einbauzug sind entweder zwei Deckenfertiger-Einheiten oder eine Deckenfertiger-Einheit mit einer zugeordneten Beschicker-Einheit. Eine mechanische Kopplung (US-A-5 100 277) lässt sich bei selbstfahrenden Einheiten nicht verwirklichen, da die jeweiligen Fahrbewegungen aus geometrischen, mechanischen und anderen Gründen in der Praxis niemals übereinstimmen. Deshalb obliegt es bisher den mehreren Fahrzeugführern, die gegenseitigen Abstände der Einheiten so weit möglich konstant zu halten. Bei in der Praxis eingesetzten Einbauzügen werden die im Verband fahrenden Einheiten durch entsprechend viele, sehr erfahrene Fahrzeugführer von je einem Bedienungsstand mit einer Betriebssteuervorrichtung gesteuert. Ein sogenannter Fahrhauptschalter dient in jeder Einheit zum Ab- und Zuschalten der Antriebe des Fahrwerks und aller Einbauaggregate. Vor einer Fahrtunterbrechung eingestellte Parameter (Fahrgeschwindigkeit, Höhenlage der Einbaubohle, Tamperdrehzahl und Vibration) werden bei Wiederaufnahme der Fahrt in jeder Einheit automatisch und exakt reproduziert. Zur Richtungssteuerung werden Lenkautomaten eingesetzt, die auf eine Referenzlinie eingestellt sind. Diese Hilfseinrichtungen entlasten die Fahrzeugführer, lösen aber bisher das Problem der Abstands-Einhaltung nicht.

Beim zweilagigen oder mehrlagigen Einbauen von Belagschichten soll im Einbauzug der Abstand jeweils zwischen Deckenfertigern weitestgehend konstant bleiben, da sich bei änderndem Abstand die Temperaturverhältnisse für die jeweils nachfolgend eingebaute Schicht ändern und die Endqualität spürbar beeinträchtigen. Gehört wenigstens ein Beschicker zum Einbauzug, dann kann dieser die Abstands-Einhaltung besonders zwischen den Deckenfertigern weiter erschweren.

In dem aus FR 2 697 547 A (WO 9410384 A) bekannten Einbauzug entsprechend dem Oberbegriff des Anspruchs 1 fährt eine Beschicker-Einheit hinter einer Deckenfertiger-Einheit, um die Sprühvorrichtung der Deckenfertiger-Einheit zu versorgen. Die Deckenfertiger-Einheit ist die permanente Leiteinheit mit strikter Abhängigkeit der Beschicker-Einheit, und steuert die Fahrgeschwindigkeit der Beschicker-Einheit. Von einem Geschwindigkeitssensor der Deckenfertiger-Einheit werden Signale an eine Fahrsteuereinheit der Beschicker-Einheit übertragen, um einen bestimmten Abstand einzuhalten. Bei Anhalten der Deckenfertiger-Einheit wird die Beschicker-Einheit über ihre Fahrsteuereinheit hin- und her gefahren, um Schäden in der Belagschicht zu verhindern.

Aus EP-A-0 667 415 ist es bekannt, bei der Beschickung eines Deckenfertigers durch einen Lastkraftwagen oder ein Beschickerfahrzeug mit Abstands- und Füllstandsmessung zu arbeiten, um den Beschickungsvorgang weitgehend zu automatisieren.

Weiterer Stand der Technik ist enthalten in DE 9204559.

Der Erfindung liegt die Aufgabe zugrunde, einen aus wahlweise kombinierten Einheiten bestehenden automatisierten Einbauzug zum Einbauen einer hochwertigen Belagschicht mit gleichbleibender Qualität zu schaffen, in der eine Qualitätsoptimierende Fernsteuerung möglich ist.

Die gestellte Aufgabe wird mit den kennzeichnenden Merkmalen des Anspruchs 1 gelöst.

Die baulichen und schaltungstechnischen Vorraussetzungen für die Leiteinheit-Funktion sind bei jeder Einheit vorgesehen. Die Leiteinheit-Funktion wird jedoch auf die Einheit übertragen, die im Einbauzug in Bezug auf die Qualität der eingebauten Belagschicht eine dominierende Rolle spielt. Der ganze Einbauzug wird vom Bedienungsstand der als Leiteinheit eingestellten Einheit gesteuert. Jede weitere Einheit benötigt keinen eigenen Fahrzeugführer. In der Leiteinheit werden die verschiedenen Betriebsparameter eingestellt, z. B. durch nur einen Fahrzeugführer oder von einer getrennten Steuerzentrale aus. Auch die Betriebsaufnahme, Geschwindigkeitsänderungen und Haltemanöver werden zentral gesteuert. Die wenigstens eine weitere Einheit wird von der Leiteinheit so geführt, dass erforderliche und relevante Betriebsparameter, eine Betriebsaufnahme oder ein Stillstand in Echtzeit auch bei der wenigstens einen weiteren Einheit eingesteuert werden. Regelmaßnahmen zur Einhaltung des jeweiligen Abstands lassen sich dabei mit berücksichtigen. Die Qualität der eingebauten Belagschicht ist hoch und gleichmäßig, da schädliche Abstandsvariationen vermieden werden und die Führung der weiteren Einheiten durch die im Hinblick auf die Belagschichtqualität dominierende Leiteinheit erfolgt.

Vorzugsweise werden von der Leiteinheit alle erforderlichen Betriebsparameter an alle Einheiten übertragen. Die Geschwindigkeits-Korrigiervorrichtung greift jeweils individuell bei der Einheit ein, die nicht Leiteinheit ist. Das Korrigieren der Geschwindigkeit dient der Konstanthaltung des Zwischenabstands. Andere Betriebsparameter können davon unbeeinflusst bleiben. Denn trotz gleicher Geschwindigkeitsvorwahl (Sollwertvorgabe für den jeweiligen Fahrantrieb) würden ggfs. die Einheiten aus geometrischen, mechanischen und hydrostatischen Gründen und wegen unterschiedlicher Traktionen trotz Fernsteuerung verschieden schnell fahren. Die Geschwindigkeits-Korrigiervorrichtung übersteuert z. B. mittels eines Abstandsfühlers, die Vorgaben der Leiteinheit, um den vorbestimmten Abstand einzuhalten. Der momentane Sollwert von der Leiteinheit ist nur eine Richtgröße bei der Regelung, die feinfühlig, in Abhängigkeit von sich andeutenden bzw. bemessenen Abstandsvariationen, durchgeführt wird. Dies ist einfach durch Anheben oder Absenken des Sollwerts in Abhängigkeit davon möglich, ob der Abstand die Tendenz zeigt, sich zu vergrößern oder zu verkleinern.

Baulich einfach wird ein Kabelstrang vom Bedienungsstand der Leiteinheit zu jedem Bedienungsstand einer weiteren Einheit verlegt, oder wird alternativ eine drahtlose Signalübertragung mit einem oder mehreren Sendern an der Leiteinheit und Empfängern an den weiteren Einheiten durchgeführt.

Ein zweckmäßiger Einbauzug dient zum zweilagigen Einbauen einer Belagschicht, wobei der Zwischenabstand zwischen den beiden Deckenfertigern konstant gehalten wird. Ist der vordere Deckenfertiger die Leiteinheit, dann wird beim hinteren Deckenfertiger die Fahrgeschwindigkeit bei Vergrößerung des Abstandes erhöht und bei Verkleinerung des Abstandes verringert. Ist der hintere Deckenfertiger die Leiteinheit, dann wird bei Vergrößerung des Abstandes die Geschwindigkeit des vorderen Deckenfertigers verringert und bei Verkleinerung des Abstandes dessen Geschwindigkeit erhöht.

Bei Einsatz auch eines Beschickers wird durch die Fernsteuerung ein konstanter Abstand zwischen dem Deckenfertiger und dem Beschicker eingehalten, um die ordnungsgemäße permanente Beschickung des Deckenfertigers sicherzustellen und Einbaustörungen zu vermeiden.

Bei einem zweckmäßigen Einbauzug beschickt ein Zweifach-Beschicker zwei nachfahrende Deckenfertiger, wobei der Abstand zwischen den Deckenfertigern und der Abstand zwischen dem vorderen Deckenfertiger und dem Beschicker konstant gehalten und der Einbau von einem einzigen Bedienungsstand gesteuert werden.

In einem Einbauzug mit vier Einheiten lassen sich alle vier Einheiten von einem Bedienungsstand steuern, wobei die Abstände zwischen den Einheiten konstant gehalten sind. Die beiden vorderen Deckenfertiger können konventionell aus Lastkraftwagen beschickt werden. Dies ist für den nachfahrenden Deckenfertiger nicht möglich, so daß dieser aus dem zwischen den vorderen Deckenfertigern mitfahrenden Beschicker über die Einbaubohlen der beiden vorderen Deckenfertiger hinweg beschickt wird. Es wird nur im Bedienungsstand der Leiteinheit ein Fahrzeugführer benötigt. Für den Beschicker relevante Parameterwerte werden über die Fernsteuerung übertragen.

Die Einheiten im Einbauzug werden zweckmäßig durch die Lenkautomaten entlang der Referenzfahrlinie geführt.

Es kann sich der Beschicker an dem daneben fahrenden Deckenfertiger orientieren, um stets auch eine optimale Ausrichtung auf den zu beschickenden Deckenfertiger einzuhalten.

Anhand der Zeichnungen werden Ausführungsformen des Erfindungsgegenstandes erläutert. Es zeigen:
- Fig. 1: schematisch und in Draufsicht eine erste Ausführungsform eines Einbauzugs,
- Fig. 2: eine geänderte Ausführungsform zu Fig. 1,
- Fig. 3: eine weitere Ausführungsform eines Einbauzugs,
- Fig. 4: eine weitere Ausführungsform eines Einbauzugs,
- Fig. 5: eine Seitenansicht eines Einbauzugs,
- Fig. 6: eine zugehörige Draufsicht zu Fig. 5, in vergrößerter Darstellung, und
- Fig. 7: eine schematische Darstellung eines Regelprinzips.

Die nachfolgend erläuterten Ausführungsvarianten sind nur eine kleine Auswahl. Detailausbildungen sind nur schematisch gezeigt und erläutert zum ausreichenden Verständnis des Grundgedankens der Erfindung. Regelungstechnische und schaltungstechnische Details sind ebenfalls vereinfacht dargestellt und erläutert und können in der Praxis in deutlich abgewandelter und komplexerer Form realisiert werden.

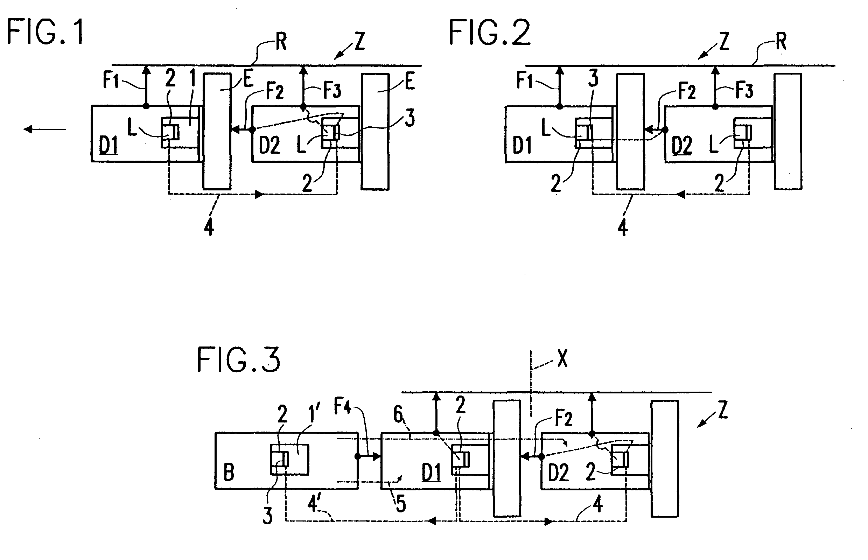

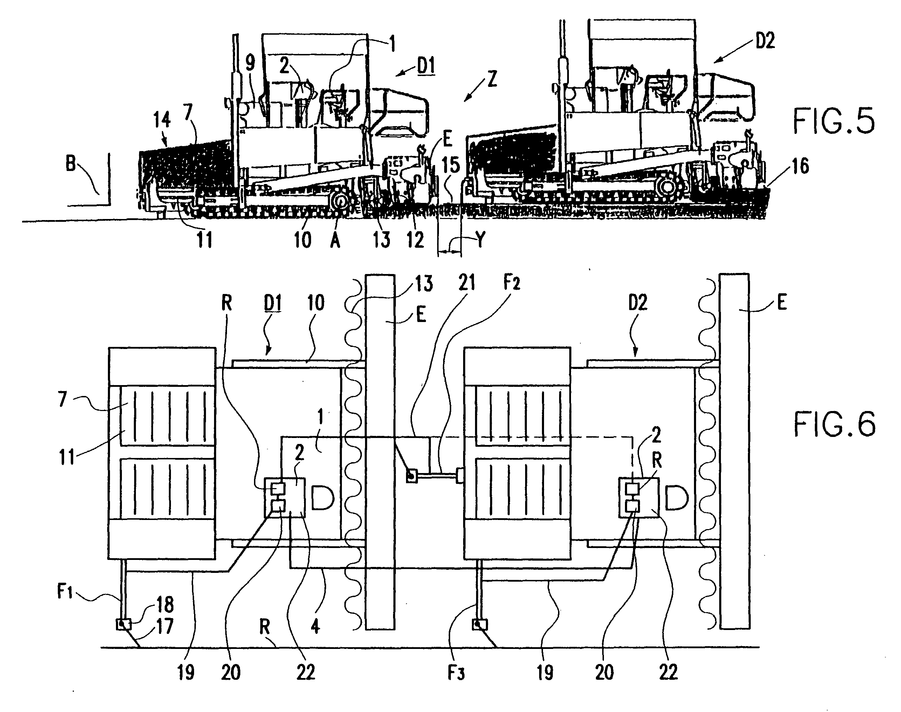

Ein Einbauzug Z zum zweilagigen Einbauen einer Belagschicht aus bituminösem oder Beton-Einbaugut (Fig. 1, 5 und 6) besteht aus mindestens zwei Deckenfertigem D1 und D2, die entlang einer Referenzfahrlinie R mit vorbestimmtem Zwischenabstand Y fahren. Jeder Deckenfertiger D1, D2 weist einen Führerstand 1 mit einer Betriebssteuervorrichtung 2 auf, in die beispielsweise ein Lenkautomat L integriert ist, und schleppt eine Einbaubohle E mit Einbauaggregaten (Fig. 5), beispielsweise einer Tampervorrichtung 12. Zumindest bei der Betriebssteuervorrichtung 2 des hinteren Deckenfertigers D2 ist eine Geschwindigkeits-Korrigiervorrichtung 3 vorgesehen, die wirkungsmäßig mit einem Abstandsfühler F2 verknüpft ist, der den Abstand Y überwacht und in Abhängigkeit von Änderungen dieses Abstandes positive oder negative Korrektursignale u.a.für die Geschwindigkeits-Korrigiervorrichtung 3. Die Betriebssteuervorrichtung 2 bzw. die Geschwindigkeits-Korrigiervorrichtung 3 des hinteren Deckenfertigers D2 ist über eine Signalübertragungsstrecke 4 mit der Betriebssteuervorrichtung 2 des vorderen Deckenfertigers D1 verbunden. Die Signalübertragungsstrecke 4 kann ein Kabelstrang sein. Es ist alternativ oder affitiv möglich, eine drahtlose Signalübertragung vorzusehen, z.B. mit einem Sender 24 und einem Empfänger 25 gemäß Fig. 7.

Der Einbauzug Z gemäß Fig. 1, 5, 6 wird vom Führerstand 1 des vorderen Deckenfertigers D1 gesteuert, der als Leiteinheit (in Fig. 1 unterstrichen) dient. Die Betriebsparameter für den hinteren Deckenfertiger D2 werden z.B. über die Signalübertragungsstrecke 4 übertragen, z.B. ein Sollwert für die Fahrgeschwindigkeit, die Höheneinstellung der Einbaubohle E, die Tamperdrehzahl, die Vibration der Einbaubohle E und dgl. Es ist dennoch möglich, einzelne Betriebsparameter beim hinteren bzw. jedem Deckenfertiger auch individuell einzustellen. Ferngesteuert wird auch der Befehl zum Anfahren oder zum Anhalten sowie zum Ein- bzw. Abschalten der Einbauaggregate übermittelt. Im Fall, daß der Sollwert für die Fahrgeschwindigkeit des hinteren Deckenfertigers D2 dazu führt, daß dieser permanent oder nur vorübergehend zu schnell oder zu langsam fährt, greift der Abstandsfühler F2 ein, dessen Korrektursignale in der Geschwindigkeits-Korrigiervorrichtung 3 berücksichtigt werden, um den Abstand Y konstant zu halten. Der Abstandsfühler F2 ist beispielsweise ein Winkelgeber (anhand Fig. 6 erläutert).

Zum Führen beider Deckenfertiger D1, D2 entlang der Referenzfahrlinie R dienen Abstandsfühler F1 und F3, die Korrektursignale an den jeweiligen Lenkautomaten L übermitteln. Ein Fahrzeugführer wird eigentlich nur im Führerstand 1 des vorderen Deckenfertigers D1 benötigt.

In Fig. 5 ist auch der bei der Ausführungsform des Einbauzugs Z gemäß Fig. 3 gezeigte Beschicker B vor dem vorderen Deckenfertiger D1, der auch in diesem Einbauzug Z die Leiteinheit ist, angedeutet.

Jeder Deckenfertiger D1 weist in einem Chassis 8 einen vorneliegenden Bunker 7 für das Einbaugut 14 auf. Eine im Chassis 8 angeordnete Längsfördervorrichtung 11 fördert das Einbaugut nach hinten vor die Einbaubohle E bzw. zu einer Querverteilvorrichtung 13 am hinteren Ende des Chassis (üblicherweise eine Schneckenanordnung). Das Chassis 8 fährt auf einem Fahrwerk 10 (Raupen- oder Räderfahrwerk), das von einem oder zwei Antriebsaggregaten A getrieben wird. Im Führerstand 1 des Deckenfertigers D1 ist die Betriebssteuervorrichtung 2 vorgesehen, von der beispielsweise ein Kabelstrang 4 zum Führerstand des hinteren Deckenfertigers D2 führt. Der vordere Deckenfertiger D1 baut eine erste Lage 15 ein, auf die der hintere Deckenfertiger D2 eine zweite Lage 16 einbaut.

Gemäß Fig. 6 sind die Abstandsfühler F1, F2, F3 Winkelgeber, die ein mit einer Winkelbewegung versetzbares Fühlglied 17 an einem signalerzeugenden Teil 18 aufweisen. Der Abstandsfühler, z.B. F1, wird auf einen vorbestimmten Abstand (z.B. zur Referenzfahrlinie R) einjustiert. Stimmt der Ist-Wert des Abstandes mit dem Soll-Wert überein, dann erzeugt der Abstandsfühler F1 kein Korrektursignal. Verändert sich der Ist-Wert gegenüber dem Soll-Wert, dann gibt der Abstandsfühler F1 positive oder negative Korrektursignale ab. Die weiteren Abstandsfühler F2 und F3 sind ähnlich konzipiert. Alternativ könnten als Abstandsfühler auch lineare Weggeber oder Ultraschall- , Radar- bzw. Lasersensoren verwendet werden. Der Abstandssensor F1 ist über eine Signalleitung 19 mit einem Fahrhauptschalter oder einer Fahrantriebssteuerung 20 in der Betriebssteuervorrichtung 2 verbunden, wie auch der Abstandsfühler F3 des hinteren Deckenfertigers D2. Der Abstandsfühler F2, der den Abstand zwischen dem Vorderende des hinteren Deckenfertigers D2 und der Hinterseite der Einbaubohle E des vorderen Deckenfertigers D1 überwacht, ist über eine Signalleitung 21 z.B. an eine Regeleinheit R für die Fahrgeschwindigkeit in der Betriebssteuervorrichtung 2 des vorderen und in diesem Fall als Leiteinheit dienenden Deckenfertigers D1 angeschlossen.

Bei dem Einbauzug Z der Fig. 2 ist der hintere Deckenfertiger (unterstrichen) die Leiteinheit. Von seiner Betriebssteuervorrichtung 2 führt die Signalübertragungsstrekke 4 auch zur Geschwindigkeits-Korrigiervorrichtung 3 des vorderen Deckenfertigers D1. Der Abstandsfühler F2 ist an die Geschwindigkeits-Korrigiervorrichtung des vorderen Deckenfertigers D1 angeschlossen. Zweckmäßigerweise ist in diesem Fall der Abstandsfühler F2 am vorderen Deckenfertiger D1 angeordnet. In Fig. 6 ist diese Anordnung der Fig. 2 (hinterer Deckenfertiger D2 als Leiteinheit) durch die gestrichelte Verbindung des Abstandsfühlers F2 mit der Regeleinrichtung R des hinteren Deckenfertigers D2 symbolisiert.

Der Einbauzug Z gemäß Fig. 3 unterscheidet sich von den vorerwähnten Einbauzügen durch einen Beschicker B, der im Abstand vor dem vorderen Deckenfertiger D1 fährt und beispielsweise als Zweifachbeschicker ausgebildet ist, der über strichpunktiert angedeutete Fördervorrichtungen 5, 6 sowohl den vorderen Deckenfertiger D1 als auch den hinteren Deckenfertiger D2 mit Einbaugut (gleicher oder unterschiedlicher Sorten) versorgt. Der vordere Deckenfertiger D1 ist die Leiteinheit und zur Fernsteuerung über die Signalübertragungsstrecke 4 mit dem hinteren Deckenfertiger D2 und über eine weitere Signalübertragungsstrecke 4' mit dem Beschicker B verbunden ist. Der Beschicker B besitzt in seinem Führerstand 1' ebenfalls eine Betriebssteuervorrichtung 2 mit einer Geschwindigkeits-Korrigiervorrichtung 3, an die die Signalübertragungsstrecke 4' angeschlossen ist. Ferner ist ein weiterer Abstandsfühler F4, zweckmäßigerweise am Beschicker B, vorgesehen, der an die Geschwindigkeits-Korrigiervorrichtung 3 angeschlossen ist, um den Abstand zwischen dem Beschicker B und dem vorderen Deckenfertiger D1 konstant zu halten.

Durch die strichpunktierte Linie X in Fig. 3 ist angedeutet, daß der Einbauzug Z auch nur aus dem Beschicker B und dem vorderen Deckenfertiger D1 bestehen kann.

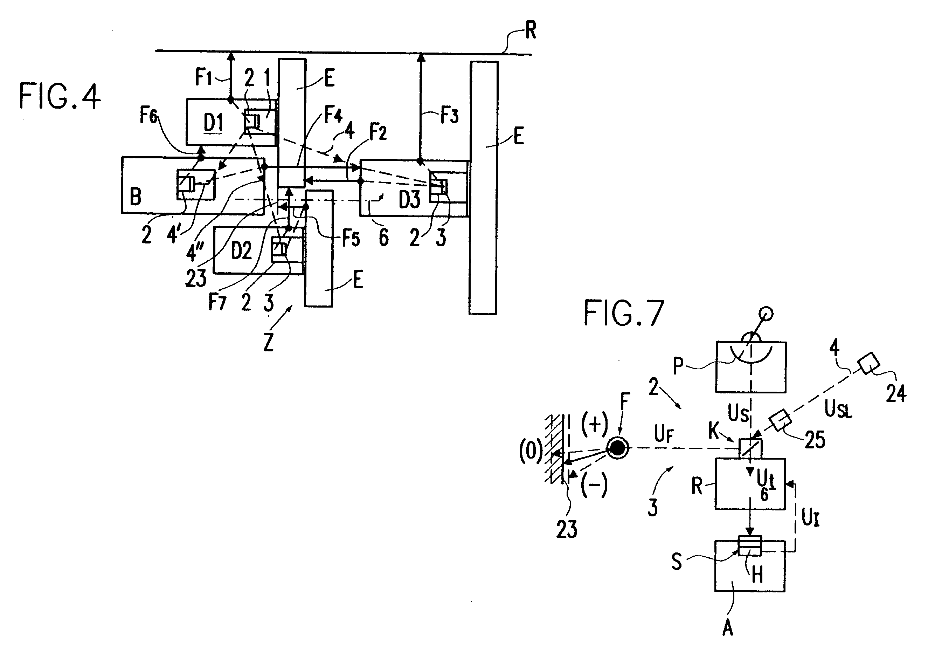

Der Einbauzug Z gemäß Fig. 4 ist für zweilagigen Einbau konzipiert und besteht aus zwei vorderen, versetzt nebeneinander fahrenden Deckenfertigern D1 und D2 und einem in etwa mittig dahinter fahrenden dritten Deckenfertiger D3, dessen Einbaubohle E über die gesamte Breite der Deckenschicht reicht. Zusätzlich fährt zwischen den beiden vorderen Deckenfertigern D1, D2 der Beschicker B, der mit einer strichpunktiert angedeuteten Fördervorrichtung 6 über die Einbaubohlen E der beiden vorderen Deckenfertiger D1, D2 hinweg den hinteren Deckenfertiger D3 mit Einbaugut versorgt.

Die beiden vorderen Deckenfertiger D1, D2 werden entweder herkömmlich von Lastkraftwagen beschickt oder vom Beschicker B oder anderen Beschickem.

Der Deckenfertiger D1 ist die Leiteinheit, die über Signalübertragungsstrecken 4, 4, und 4" die beiden anderen Deckenfertiger D2, D3 und den Beschicker B fernsteuert. Ein beispielsweise am hinteren Deckenfertiger D3 angeordneter Abstandsfühler F2 überwacht dessen Abstand von der Einbaubohle des vorderen Deckenfertigers D1. Ein beispielsweise am Beschicker B angeordneter weiterer Abstandsfühler F4 überwacht dessen Abstand zum hinteren Deckenfertiger D3, und zwar in Fahrtrichtung. Ein am vorderen Deckenfertiger D2 angeordneter Abstandsfühler F5 überwacht dessen Abstand zu einem Referenzgeber 23 des vorderen Deckenfertigers D1. Seitliche Abtandsfühler F1 und F3 und F7 sind mit den jeweiligen Lenkautomaten verknüpft. Der Beschicker B wird mittels eines weiteren Abstandsfühlers F6 neben dem vorderen Deckenfertiger D1 geführt.

Fig. 7 verdeutlicht schematisch eine Geschwindigkeits-Korrigiervorrichtung 3, die mit einer Betriebssteuervorrichtung 2, beispielsweise des hinteren Deckenfertigers D2 in Fig. 1, verknüpft ist.

Zum selbständigen Steuern der Arbeits-Geschwindigkeit eines Deckenfertigers (ohne Fernsteuerung) wird mittels eines Fahrhebels und Potentiometer P ein Soll-Wert U_{S} für die Fahrgeschwindigkeit eingestellt. Dieser Soll-Wert wird einem Regler R aufgegeben, der ein Stellglied S, beispielsweise eines Hydraulikmotors H, betätigt, um die Fahrgeschwindigkeit einzustellen. Die Ist-Fahrgeschwindigkeit Uₗ wird erfaßt und an den Regler R weitergeleitet. Der Regler R sorgt für die Angleichung der Ist-Fahrgeschwindigkeit an die Soll-Fahrgeschwindigkeit.

Der Abstandsfühler F ist auf den bestimmten Abstand Y zum Referenzgeber 23 eingestellt. Stimmt der Abstand, dann gibt der Abstandsfühler F kein Signal (O) ab. Der Regler R arbeitet mit U_{S} und Uₗ. Vergrößert sich der Abstand, dann gibt der Abstandsfühler F ein positives Korrektursignal UF (z.B. einen Spannungspegel) ab, der in einer Korrekturschaltung K ausgewertet wird, die den Soll-Wert U_{S} für den Regler R anhebt, um den Deckenfertiger zu beschleunigen, bis der Abstand Y wieder erreicht ist.

Verringert sich der Abstand, dann gibt der Abstandsfühler F ein negatives Korrektursignal U_{F} ab, das die Korrekturvorrichtung K auswertet, um den Soll-Wert U_{S} für den Regler R zu vermindern. Der Regler R steuert das Stellglied S dementsprechend an.

Zur Fernsteuerung des Deckenfertigers D2, ist, z.B., an die Sollwert-Übertragungstrecke zur Korrekturvorrichtung K die Signalübertragungsstrecke 4 angeschlossen, z.B. in Form des Kabelstrangs oder drahtlos (Sender 24 und Empfänger 25). Der Soll-Wert U_{SL} von der Leiteinheit steht an der Korrekturvorrichtung K an und wird vom Regler R berücksichtigt. In der Korrekturvorrichtung K werden auch die Signale des Abstandsfühlers F berücksichtigt, um den Soll-Wert U_{SL} entsprechend Änderungen des Abstandes anzuheben oder zu vermindern. Die Geschwindigkeitssteuerung des ferngesteuerten Deckenfertigers ist in dieser Betriebsphase zweckmäßigerweise passiviert.

Bei einer geänderten Ausführungsform könnte die Betriebssteuervorrichtung 2 der Leiteinheit die Korrektursignale aller in Fahrtrichtung wirkenden Abstandsfühler erhalten, auswerten und verarbeiten, um von der Leiteinheit aus die Geschwindigkeiten der weiteren Einheiten so zu regeln, daß die Abstände konstant bleiben. Gegebenenfalls werden dann alle in Fahrtrichtung wirkenden Abstandsfühler an der Leiteinheit angebracht. GGfs. steuert der Lenkautomat der Leiteinheit die Lenkautomaten der weiteren Einheiten sogar direkt.

## Patentansprüche

1. Einbauzug (Z) zum Herstellen einer Belagschicht (15, 16) aus bituminösem oder Beton-Einbaugut (14) auf einer Verkehrsfläche, bestehend aus mindestens zwei selbständig angetriebenen, im Verband fahrbaren Einheiten (D1, D2, D3, B), die mehrere Deckenfertiger-Einheiten oder eine Beschickereinheit und wenigstens eine Deckenfertiger-Einheit sind, wobei eine Einheit als Leiteinheit eingestellt ist und jede weitere Einheit fernsteuert, **dadurch gekennzeichnet, dass** jede Einheit (D1, D2, D3, B) des Einbauzugs (Z) wahlweise als Leiteinheit zum Fernsteuern jeder weiteren Einheit einstellbar ist.

2. Einbauzug nach Anspruch 1, **dadurch gekennzeichnet, dass** jede Einheit (D1, D2, D3, B) eine Betriebssteuervorrichtung (2) aufweist, an die Fahrantriebs-Stellglieder (S) und Stell- oder Betätigungsglieder sekundärer Antriebsaggregate der Einheit angeschlossen sind, dass zwischen der Betriebssteuervorrichtung (2) der Leiteinheit und der Betriebssteuervorrichtung (2) jeder weiteren Einheit eine Fernsteuerungs-Signalübertragungsstrecke (4, 4', 4") vorgesehen ist, und dass eine für je zwei in einem vorbestimmten gegenseitigen Abstand (Y) angeordnete Einheiten vorgesehene Geschwindigkeits-Korrigiervorrichtung (3) mit der Betriebssteuervorrichtung (2) der jeweiligen Einheit verknüpft ist.

3. Einbauzug nach wenigstens einem der vorhergehenden Ansprüche, **dadurch gekennzeichnet, dass** jede Einheit (D1, D2, D3, B) zwischen der Betriebssteuervorrichtung (2) und Fahrantriebs-Stellgliedern (S) vorgesehene Sollwert-Übertragungseinrichtungen aufweist, dass die Fernsteuerungs-Signalübertragungsstrecke (4, 4', 4") von der Leiteinheit an die Sollwert-Übertragungseinrichtung der Einheit angeschlossen ist, und dass ein momentaner Sollwert (U_{S}, U_{SL}) für die Fahrantriebs-Stellglieder (S) der Einheit proportional zu Variationen des Abstandes (Y) in Abhängigkeit von Korrektursignalen (U_{F}) variierbar ist.

4. Einbauzug nach Anspruch 3, **dadurch gekennzeichnet, dass** der Sollwert (U_{S}, U_{SL}) ein mittels eines Potentiometers (P) vorgebbarer, elektrischer und eine bestimmte Fahrgeschwindigkeit repräsentierender Spannungswert ist, der mittels der Korrektursignale variierbar ist.

5. Einbauzug nach wenigstens einem der vorhergehenden Ansprüche, **dadurch gekennzeichnet, dass** die Signalübertragungsstrecke (4, 4', 4") jeweils ein die Leiteinheit mit einer weiteren Einheit verbindender Kabelstrang ist.

6. Einbauzug nach Anspruch 2, **dadurch gekennzeichnet, dass** die Signalübertragungsstrecke (4, 4', 4") aus einem Sender (24) an der Leiteinheit und einem Empfänger (25) an der jeweils weiteren Einheit besteht und zu einer drahtlosen Signalübertragung ausgebildet ist.

7. Einbauzug nach wenigstens einem der vorhergehenden Ansprüche, **dadurch gekennzeichnet, dass** der Einbauzug (Z) aus mindestens zwei mit jeweils dem vorbestimmten Abstand (Y) hintereinander fahrenden Deckenfertiger-Einheiten (D1, D2) besteht, von denen eine (D1 oder D2) die Leiteinheit ist und jede weitere Deckenfertiger-Einheit (D1, D2) ihre Geschwindigkeits-Korrigiervorrichtung (3) aufweist.

8. Einbauzug nach wenigstens einem der Ansprüche 1 bis 6, **dadurch gekennzeichnet, dass** der Einbauzug (Z) aus einer vorausfahrenden Beschicker- Einheit (B) und wenigstens einer nachfahrenden Deckenfertiger-Einheit (D1, D2) besteht, und dass, vorzugsweise, der Deckenfertiger (D1, D2) die Leiteinheit ist.

9. Einbauzug nach wenigstens einem der Ansprüche 1 bis 6, **dadurch gekennzeichnet, dass** der Einbauzug (Z) aus einer vorausfahrenden Zweifach-Beschicker-Einheit (B) und aus zwei hinter diesem und hintereinander fahrenden Deckenfertiger-Einheiten (D1, D2) besteht, von denen eine die Leiteinheit ist.

10. Einbauzug nach wenigstens einem der Ansprüche 1 bis 6, **dadurch gekennzeichnet, dass** der Einbauzug (Z) aus zwei versetzt nebeneinander fahrenden Deckenfertiger-Einheiten (D1, D2) und einer in etwa mittig hinter diesen fahrenden weiteren Deckenfertiger-Einheit (D3) sowie aus einem vor der weiteren Deckenfertiger-Einheit (D3) und zwischen den beiden Deckenfertiger-Einheiten (D1, D2) fahrenden Beschicker-Einheit (B) für die weitere Deckenfertiger-Einheit (D3) besteht, dass eine der beiden vorderen Deckenfertiger-Einheiten (D1, D2), die Leiteinheit ist, und dass zumindest die weiteren Einheiten jeweils mit einer Geschwindigkeits-Korrigiervorrichtung ausgestattet sind, um den Abstand (Y) einzuhalten.

11. Einbauzug nach wenigstens einem der vorhergehenden Ansprüche, **dadurch gekennzeichnet, dass** über die Signalübertragungsstrecke (4, 4', 4") in einem Führerstand (1) der Leiteinheit an einem Fahrhauptschalter für das Fahrwerk (10, A) und alle Einbauaggregate (11, 13, 12) reproduzierbar eingestellte Parameterwerte für Fahrgeschwindigkeit, Höhenlage der Einbaubohle (E), Tamperdrehzahl und Vibration, Heizeinrichtung, und dgl., an den Führerstand (1) jeder weiteren Einheit übertragbar sind.

12. Einbauzug nach den vorhergehenden Ansprüchen, **dadurch gekennzeichnet, dass** die Einheiten mit Lenkautomaten (L) ausgestattet sind, die mit Hilfe von Abstandsfühlern (F1, F3, F6, F7) auf eine Referenz-Fahrlinie (R) eingestellt sind.

13. Einbauzug nach den Ansprüchen 10 und 12, **dadurch gekennzeichnet, dass** der Lenkautomat (L) der Beschicker-Einheit (B), vorzugsweise mittels eines Abstandsfühlers (F6), auf die von einer daneben fahrenden Deckenfertiger-Einheit (D1) gebildete Referenzlinie eingestellt ist.

## Claims

1. A pavement-vehicle convoy (Z) used for producing a cover layer (15, 16) of bituminous or concrete road-surface material (14) on a traffic area and consisting of at least two independently driven units (D1, D2, D3, B) which are adapted to be driven in convoy and which are a plurality of road-surface finishers or one charger and at least one road-surface finisher, one of said units being adjusted as a command unit and used for remotely controlling each further unit, **characterized in that** each unit (D1, D2, D3, B) of the pavement-vehicle convoy (Z) can selectively be adjusted as a command unit for remotely controlling each further unit.

2. A pavement-vehicle convoy according to claim 1, **characterized in that each** unit (D1, D2, D3, B) is provided with an operation control device (2) having connected thereto travelling-drive actuator elements (S) and regulating or actuating elements of secondary drive units of the unit in question, that a remote-control signal transmission path (4, 4', 4") is provided between the operation control device (2) of the command unit and the operation control device (2) of each additional unit, and that a speed correcting device (3) is coupled to the operation control device (2) of the respective unit, said speed correcting device (3) being provided for two respective units which are arranged at a predetermined distance (Y) from each other,

3. A pavement-vehicle convoy according to at least one of the preceding claims, **characterized in that** each unit (D1, D2, D3, B) is provided with target-value transmission means arranged between the operation control device (2) and travelling-drive actuator elements (S), that the remote-control signal transmission path (4, 4', 4") of the command unit is connected to the target-value transmission means of the unit, and that an instantaneous target value (U_{S}, U_{SL}) for the travelling-drive actuator elements (S) of the unit can be varied proportionally to variations of the distance (Y) in response to the corrections signals (U_{F}).

4. A pavement-vehicle convoy according to claim 3, **characterized in that** the target value (U_{S}, U_{SL}) is an electric voltage value which is representative of a specific travelling speed and which is adapted to be predetermined by means of a potentiometer (P), said voltage value being adapted to be varied by means of the correction signals.

5. A pavement-vehicle convoy according to at least one of the preceding claims, **characterized in that** the respective signal transmission path (4, 4', 4") is a cable harness connecting the command unit to a further unit.

6. A pavement-vehicle convoy according to claim 2, **characterized in that** the signal transmission path (4, 4', 4") consists of a transmitter (24) on the command unit and a receiver (25) on the respective other unit and is implemented such that it permits wireless signal transmission.

7. A pavement-vehicle convoy according to at least one of the preceding claims, **characterized in that** the pavement-vehicle convoy (Z) consists of at least two road-surface finisher units (D1, D2) travelling one behind the other at said predetermined distance (Y), one of said units (D1 or D2) being the command unit and each additional road-surface finisher unit (D1, D2) including its speed correcting device (3).

8. A pavement-vehicle convoy according to at least one of the claims 1 to 6, **characterized in that** the pavement-vehicle convoy (Z) consists of a charger unit (B) travelling in front and of at least one road-surface finisher unit (D1, D2) travelling behind, and that the road-surface finisher (D1, D2) is, preferably, the command unit.

9. A pavement-vehicle convoy according to at least one of the claims 1 to 6, **characterized in that** the pavement-vehicle convoy (Z) consists of a dual charger unit (B) travelling in front and of two road-surface finisher units (D1, D2) travelling behind said dual charger unit (B) and one behind the other, one of said road-surface finisher units (D1, D2) being the command unit.

10. A pavement-vehicle convoy according to at least one of the claims 1 to 6, **characterized in that** the pavement-vehicle convoy (Z) consists of two road-surface finisher units (D1, D2) travelling beside one another but in displaced relationship with one another and of a further road-surface finisher unit (D3) travelling behind the two first-mentioned ones approximately in the middle thereof as well as of a charger unit (B) for said further road-surface finisher unit (D3), said charger unit (B) travelling in front of said further road-surface finisher unit (D3) and between the two road-surface finisher units (D1, D2), that one of said two front road-surface finisher units (D1, D2) is the command unit, and that at least the additional units are each equipped with a speed correcting device for observing the distance (Y).

11. A pavement-vehicle convoy according to at least one of the preceding claims, **characterized in that,** via the signal transmission path (4, 4', 4") in a driver's cabin (1) of the command unit, parameter values for the travelling speed, adjustment level of the road-surface applying screed (E), tamper speed and vibration, power of the heating means and the like, which are reproducably adjusted at a travel master controller for the travelling mechanism (10, A) and all road-surface applying units (11, 13, 12), can be transferred to the driver's cabin (1) of each additional unit.

12. A pavement-vehicle convoy according to at least one of the preceding claims, **characterized in that** the units are equipped with automatic steering systems (L) which are adjusted to a reference travelling line (R) with the aid of distance sensors (F1, F3, F6, F7).

13. A pavement-vehicle convoy according to claims 10 and 12, **characterized in that** the automatic steering system (L) of the charger unit (B) is adjusted, preferably by means of a distance sensor (F6), to the reference line defined by a road-surface finisher unit (D1) travelling beside said charger unit (B).

## Revendications

1. Train de finisseuses (Z) destiné à réaliser une couche de revêtement (15, 16) en un matériau bitumineux ou en béton (14) sur une zone de circulation, formé d'au moins deux unités (D1, D2, D3, B) entraînées indépendamment et pouvant être déplacées ensemble, lesquelles unités sont plusieurs unités finisseuses de revêtement ou une unité d'alimentation et au moins une unité finisseuse de revêtement, une unité étant réglée comme unité directrice et commandant à distance chaque unité supplémentaire, **caractérisé en ce que** chaque unité (D1, D2, D3, B) du train de finisseuses (Z) peut être réglée de manière sélective comme unité directrice pour télécommander chaque unité supplémentaire.

2. Train de finisseuses selon la revendication 1, **caractérisé en ce que** chaque unité (D1, D2, D3, B) comporte un dispositif de commande de fonctionnement (2) auquel sont connectés des actionneurs d'organe de translation (S) et des actionneurs ou organes d'actionnement de groupes d'entraînement secondaires de l'unité, qu'un circuit de transmission de signal de télécommande (4, 4', 4") est prévu entre le dispositif de commande de fonctionnement (2) de l'unité directrice et le dispositif de commande de fonctionnement (2) de chaque unité supplémentaire, et qu'un dispositif de correction de vitesse (3) prévu pour chaque paire d'unités disposées à une distance (Y) mutuelle prédéterminée est lié au dispositif de commande de fonctionnement (2) de l'unité considérée.

3. Train de finisseuses selon au moins une des revendications précédentes, **caractérisé en ce que** chaque unité (D1, D2, D3, B) comporte des dispositifs de transmission de valeur de consigne prévus entre le dispositif de commande de fonctionnement (2) et des actionneurs d'organe de translation (S), que le circuit de transmission de signal de télécommande (4, 4', 4") est connecté de l'unité directrice au dispositif de transmission de valeur de consigne de l'unité, et que l'on peut faire varier une valeur de consigne momentanée (U_{S}, U_{SL}) pour les actionneurs d'organe de translation (S) de l'unité, proportionnellement à des variations de la distance (Y), en fonction de signaux de correction (U_{F}).

4. Train de finisseuses selon la revendication 3, **caractérisé en ce que** la valeur de consigne (U_{S}, U_{SL}) est une valeur de tension électrique pouvant être prédéterminée au moyen d'un potentiomètre (P) et représentant une vitesse de déplacement déterminée, valeur que l'on peut faire varier au moyen des signaux de correction.

5. Train de finisseuses selon au moins une des revendications précédentes, **caractérisé en ce que** le circuit de transmission de signal (4, 4', 4") est un faisceau de câbles respectifs reliant l'unité directrire à une unité supplémentaire.

6. Train de finisseuses selon la revendication 2, **caractérisé en ce que** le circuit de transmission de signal (4, 4', 4") est formé d'un émetteur (24) sur l'unité directrice et d'un récepteur (25) sur chaque unité supplémentaire et qu'il est agencé pour une transmission de signal sans fil.

7. Train de finisseuses selon au moins une des revendications précédentes, **caractérisé en ce que** le train de finisseuses (Z) est formé d'au moins deux unités finisseuses de revêtement (D1, D2) se déplaçant l'une derrière l'autre à la distance (Y) prédéterminée, unités parmi lesquelles une (D1 ou D2) est l'unité directrice et chaque unité finisseuse de revêtement (D1, D2) supplémentaire comporte son dispositif de correction de vitesse (3).

8. Train de finisseuses selon au moins une des revendications 1 à 6, **caractérisé en ce que** le train de finisseuses (Z) est formé d'une unité d'alimentation (B) se déplaçant devant et d'au moins une unité finisseuse de revêtement (D1, D2) se déplaçant derrière et que de préférence la finisseuse de revêtement (D1, D2) est l'unité directrice.

9. Train de finisseuses selon au moins une des revendications 1 à 6, **caractérisé en ce que** le train de finisseuses (Z) est formé d'une unité d'alimentation double (B) se déplaçant devant et de deux unités finisseuses de revêtement (D1, D2) se déplaçant derrière celle-ci et l'une derrière l'autre et dont l'une est l'unité directrice.

10. Train de finisseuses selon au moins une des revendications 1 à 6, **caractérisé en ce que** le train de finisseuses (Z) est formé de deux unités finisseuses de revêtement (D1, D2) se déplaçant côte à côte en décalage et d'une unité finisseuse de revêtement (D3) supplémentaire se déplaçant derrière celles-ci sensiblement au centre ainsi que d'une unité d'alimentation (B), pour l'unité finisseuse de revêtement (D3) supplémentaire, se déplaçant devant l'unité finisseuse de revêtement (D3) supplémentaire et entre les deux unités finisseuses de revêtement (D1, D2), qu'une des deux unités finisseuses de revêtement (D1, D2) avant est l'unité directrice et qu'au moins les unités supplémentaires sont équipées chacune d'un dispositif de correction de vitesse afin de respecter la distance (Y).

11. Train de finisseuses selon au moins une des revendications précédentes, **caractérisé en ce que** des valeurs de paramètre réglées de manière reproductible, pour la vitesse de déplacement, la hauteur de la poutre finisseuse (E), la vitesse de rotation du dispositif dameur et la vibration, le dispositif de chauffage, et analogues, peuvent être transmises d'un poste de conduite (1) de chaque unité supplémentaire par l'intermédiaire du circuit de transmission de signal (4, 4', 4") dans le poste de conduite (1) de l'unité-mère, au niveau d'un commutateur principal pour le mécanisme de roulement (10, A) et tous les groupes finisseurs (11, 13, 12).

12. Train de finisseuses selon les revendications précédentes, **caractérisé en ce que** les unités sont équipées de dispositifs de pilotage automatique (L) qui sont réglés sur une ligne de déplacement de référence (R) à l'aide de capteurs de distance (F1, F3, F6, F7).

13. Train de finisseuses selon les revendications 10 et 12, **caractérisé en ce que** le dispositif de pilotage automatique (L) de l'unité de chargement (B) est réglé, de préférence à l'aide d'un capteur de distance (F6), sur la ligne de référence formée par une unité finisseuse de revêtement (D1) se déplaçant à côté.
